# EUROPEAN PATENT SPECIFICATION

(11) **EP 4 756 729 B1**
(45) Date of publication and mention of the grant of the patent: **09.09.2026**
(21) Application number: 24218150.1
(22) Date of filing: 06.12.2024
(51) Int. Cl.: G06V 10/44, G06V 10/82

(54) **ADAPTIVE NEURAL NETWORK SELECTION METHOD AND SYSTEM**
VERFAHREN UND SYSTEM ZUR AUSWAHL EINES ADAPTIVEN NEURONALEN NETZES
PROCÉDÉ ET SYSTÈME DE SÉLECTION DE RÉSEAU NEURONAL ADAPTATIF

(43) Date of publication of application: 10.06.2026
(73) Proprietor: Axis AB, 223 69 Lund (SE)
(72) Inventor: Hassbring, Ludvig, 223 69 LUND (SE); Yuan, Song, 223 69 LUND (SE)
(74) Representative: AWA Sweden AB

(56) References cited:
- US-A1- 2021 073 945

## Description

The present disclosure relates to processing of images captured by a camera, specifically to methods and systems for selecting neural networks based on zoom levels in cameras equipped with zoom functionality.

### Background

Artificial intelligence (Al) and neural networks have become central to modern imaging systems, providing powerful capabilities for tasks like object detection, segmentation, and scene understanding. These technologies leverage deep learning to process images in ways that were previously unattainable, allowing automated recognition and analysis of complex visual data. Neural networks, in particular, have been optimized for imaging applications, adapting to various fields such as security, surveillance, and autonomous driving. Their integration into imaging systems has greatly enhanced the capacity of cameras to perform real-time analysis and make context-sensitive adjustments based on the captured scene.

A factor influencing the effectiveness of neural networks in these applications is the resolution at which they operate. High-resolution networks increase the detection range, allowing the system to identify and analyze objects at a greater distance. This added range is particularly beneficial for applications where early detection of distant objects is required. However, high-resolution processing also comes with a computational cost, resulting in longer inference times. This may be problematic in time-sensitive environments. For cameras constantly receiving new image frames at a high rate, not allowing a new frame to be pushed unless the network has finished is not an option.

PTZ (pan-tilt-zoom) cameras, commonly used in surveillance and security, are particularly impacted by this challenge. PTZ cameras may sometimes use relatively high frames per second (FPS) to ensure smooth and accurate tracking of moving objects or to provide a clear and detailed real-time feed in dynamic environments. As these cameras move to track a subject or shift to new angles, the detection range and perspective may change dynamically. PTZ cameras often face challenges due to the processing lag inherent to high-resolution neural networks. If, for example, a camera system is configured to mask items in substantially real-time, scenarios involving movement in the scene may cause challenges in placing the mask correctly. PTZ cameras can make it even more difficult to estimate mask placement since not only the objects in scene, but also the camera itself, may change. One approach to address this issue involves freezing the displayed image until the object has been fully analyzed and the mask correctly positioned. However, this method may necessitate reducing the FPS to allow sufficient time for processing, which is not necessarily a good solution for PTZ cameras.

It is therefore an objective of the present disclosure to enable efficient processing and maintain optimal detection accuracy, addressing the challenges related to the complexity of using neural networks in tasks like object detection and segmentation.

US2021/073945A1 represents relevant prior art.

### Summary

The present disclosure relates to a computer-implemented method for segmentation and/or object detection in images captured by a camera having zoom capability, the method comprising:
obtaining one or more images from the camera;
obtaining a zoom factor of the camera, wherein the zoom factor represents a measure of a current zoom level applied by the camera when capturing the one or more images;
selecting, based on the zoom factor, one neural network from a plurality of neural networks configured to segment the one or more images and/or detect one or more objects in the one or more images, wherein the plurality of neural networks are configured to operate at different image resolutions,
   wherein a higher zoom factor corresponds to selecting a neural network configured to operate at a lower image resolution, and a lower zoom factor corresponds to selecting a neural network configured to operate at a higher image resolution;
down-scaling the one or more images to the image resolution required by the selected neural network;
applying the selected neural network to segment the down-scaled one or more images and/or detect the one or more objects in the down-scaled one or more images. The method enables a camera system to dynamically adjust image processing to the camera's current zoom level, enhancing efficiency by reducing unnecessary detailed processing load at high zoom levels. When zoomed out, a neural network configured to operate at a higher image resolution is selected. This can capture broader scene details. Zooming in causes the system to select a network with a lower image resolution, which minimizes computational load for a narrower field of view. By associating a specific resolution network with each zoom range, the system can adapt to changing imaging requirements in substantially real time. In one embodiment zoom factors may be associated with suitable models according to, for example, a predefined table.

Through a structured configuration of neural networks with defined image resolution capabilities, the method may optimize processing speed, resource allocation, and detection reliability in environments where real-time segmentation and object detection are used. The method can be said to enable accurate detection across varying distances and zoom factors without the delays typically associated with high-resolution network processing.

The method further includes down-scaling of captured images to match the resolution of the selected network, ensuring that each image is appropriately processed without excess detail beyond what is needed for accurate segmentation or object detection. Once down-scaled, the selected neural network is applied to the image, performing segmentation or detecting objects within the adjusted resolution framework. This design enables the system to adapt to variable zoom levels, maintaining effective detection performance while managing processing resources efficiently, particularly in time-sensitive environments where the zoom factor fluctuates frequently.

The method may involve dynamic re-selection of a neural network from the plurality of neural networks as the zoom factor changes. This ensures that the selected neural network continuously corresponds to the current zoom factor of the camera, allowing continuous adjustments in segmentation and detection processes. This dynamic re-selection supports fluid zoom transitions, particularly useful in PTZ cameras where the zoom level may be adjusted frequently.

More specifically, the method may involve re-selecting a neural network configured to operate at a lower image resolution when the zoom factor goes above a predefined upper zoom factor threshold, and re-selecting a neural network configured to operate at a higher image resolution when the zoom factor goes below a predefined lower zoom factor threshold. These thresholds create a framework for balancing processing speed and detection accuracy as zoom levels cross certain boundaries.

The disclosure further relates to a camera system comprising a camera for capturing images, the camera having zoom capability; processing circuitry configured to: obtain one or more images from the camera; obtain a zoom factor of the camera, wherein the zoom factor represents a measure of a current zoom level applied by the camera when capturing the one or more images; select, based on the zoom factor, one neural network from a plurality of neural networks configured to segment the one or more images and/or detect one or more objects in the one or more images, wherein the plurality of neural networks are configured to operate at different image resolutions, wherein a higher zoom factor corresponds to selecting a neural network configured to operate at a lower image resolution, and a lower zoom factor corresponds to selecting a neural network configured to operate at a higher image resolution; down-scale the one or more images to the image resolution required by the selected neural network; and apply the selected neural network to segment the down-scaled one or more images and/or detect the one or more objects in the down-scaled one or more images.

### Description of drawings

The drawings are exemplary and are intended to illustrate some of the features of the presently disclosed computer-implemented method for segmentation and/or object detection in images captured by a camera having zoom capability, and are not to be construed as limiting to the presently disclosed invention.
Fig. 1 shows a flow chart of a method according to an embodiment of the presently disclosed computer-implemented method for segmentation and/or object detection in images captured by a camera having zoom capability.
Fig. 2 shows an embodiment of camera system for segmentation and/or object detection.
Figs. 3A and 3B show examples of dynamic re-selection of a neural network as the zoom factor changes.
Fig. 4 shows an illustration of a configuration of the presently disclosed camera system for segmentation and/or object detection with a maximum depth for a view.
Fig. 5 shows an example of variation of the maximum depth as the camera scans an environment.

### Detailed description

The present disclosure relates to a computer-implemented method for segmentation and/or object detection in images captured by a camera having zoom capability.

A "camera having zoom capability" refers to a camera equipped with mechanisms that allow it to alter its field of view and magnification of captured scenes by adjusting its zoom level. This capability enables the camera to either zoom in on distant objects, bringing them into closer view, or zoom out to encompass a wider scene. Zoom functionality is achieved through optical, digital, or a combination of both zoom methods.

A neural network typically has an input resolution and an output resolution. The image resolution that is referred to in the present disclosure is the input resolution. This is the resolution or size of the image that is fed into the neural network. It defines the dimensions of the input layer of the network, meaning the network expects the image to be resized, or down-scaled, if needed, to this specific resolution before processing begins.

'Down-scaling' refers to reducing the resolution of an image, which decreases the number of pixels and therefore the overall detail in the image. Down-scaling leads to a lower resolution while maintaining the original content of the image. The down-scaling may thus be a uniform down-scaling. Unlike cropping, the down-scaling preserves the entirety of the scene, albeit at a reduced level of detail.

Segmentation and object detection are processes that would generally be known to a person skilled in the art in the field of computer vision and image processing. In the context of the present disclosure, segmentation and object detection are performed using neural networks to identify and categorize different regions or objects within images captured by a camera. The concepts are nevertheless described in further detail in the following.

Segmentation refers to the process of dividing an image into distinct regions based on certain criteria, such as color, texture, or the presence of specific features. The goal of segmentation is to isolate meaningful areas within the image, grouping pixels that share certain properties and distinguishing them from other regions. This process can be used to identify objects or specific parts of objects within an image.

A person skilled in the art would generally be familiar with existing segmentation techniques and implementation of segmentation algorithms.

As an example, segmentation may use a convolutional neural network (CNN) or a fully convolutional network (FCNs). Unlike traditional CNNs, FCNs do not include fully connected layers. Instead, they apply convolutional layers across the entire input image, maintaining the spatial information required for pixel-wise predictions. This architecture allows the model to assign a class label to each pixel, outputting a segmented map of the image. To retain spatial details, FCNs often incorporate techniques like up-sampling or deconvolution layers, which restore the spatial resolution after down-sampling operations in the network.

Some segmentation models incorporate multi-scale feature extraction to improve accuracy in diverse environments. For instance, pyramid pooling modules or feature pyramids enable the model to analyze input images at multiple scales. By processing the image at different resolutions simultaneously, the model can better handle variations in object size and improve segmentation accuracy, particularly in complex scenes with both large and small objects.

Segmentation models are typically trained on large datasets of labeled images, where each pixel is annotated with the correct class. Training involves optimizing the model to minimize a loss function, such as cross-entropy loss or dice coefficient, which quantifies the difference between the predicted segmentation map and the ground truth. Data augmentation techniques, such as random cropping, scaling, and rotation, are commonly applied to improve model robustness and performance on unseen data.

Once trained, segmentation models produce a map that labels each pixel in the input image, enabling detailed analysis of the scene. This map can be used in various applications. The output segmentation map serves as a foundation for further analysis, including object detection, tracking, and instance segmentation, where individual instances of the same object class are distinguished.

Object detection involves identifying and locating specific objects within an image, typically by drawing bounding boxes around the detected objects. Object detection may go beyond mere classification, as it may provide information about the position and size of each detected object within the scene. This process is commonly used in applications such as surveillance.

A person skilled in the art would generally be familiar with existing object detection techniques and implementation of object detection algorithms.

One approach to object detection involves convolutional neural networks (CNNs) that analyze spatial features across an image to identify patterns associated with different object classes. Object detection models are generally divided into two categories: single-stage and two-stage detectors. Single-stage detectors, like YOLO (You Only Look Once) and SSD (Single Shot MultiBox Detector), predict bounding boxes and class labels directly in a single pass through the network, making them efficient for real-time applications. Two-stage detectors, such as Faster R-CNN (Region-based Convolutional Neural Network), separate the detection process into two steps: generating region proposals and then classifying these proposals, which often results in higher accuracy but slower processing speeds.

YOLO is a commonly used single-stage detector known for its speed and efficiency. It divides the image into a grid and simultaneously predicts bounding boxes and class probabilities for each grid cell.

To implement object detection in practice, an image is first passed through a CNN that generates feature maps. For single-stage models like YOLO, the network directly outputs bounding box coordinates, class labels, and confidence scores for each detected object. For two-stage models like Faster R-CNN, the RPN generates initial bounding boxes, which are further processed by a classification network to refine the predictions. The final output is a set of bounding boxes with associated class labels and confidence scores, indicating the detected objects and their positions within the image.

Training an object detection model requires a large dataset where each object is annotated with bounding boxes and class labels. The model learns to minimize a multipart loss function that combines classification loss (for correct labelling) and localization loss (for accurate bounding box prediction). Data augmentation techniques, such as scaling, cropping, and flipping, are commonly used during training to improve the model's robustness and generalization.

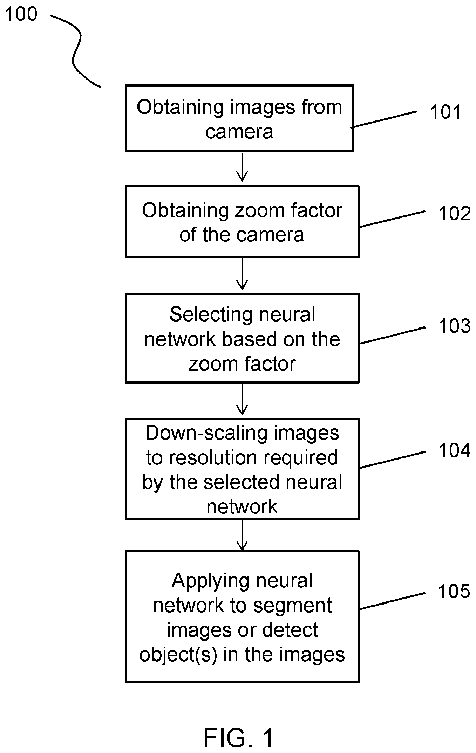

Fig. 1 shows a flow chart of a method according to an embodiment of the presently disclosed computer-implemented method 100 for segmentation and/or object detection in images captured by a camera having zoom capability. In the specific example of fig. 1 the computer-implemented method 100 comprises the steps of:
obtaining one or more images from the camera (101);
obtaining a zoom factor of the camera, wherein the zoom factor represents a measure of a current zoom level applied by the camera when capturing the one or more images (102);
selecting, based on the zoom factor, one neural network from a plurality of neural networks configured to segment the one or more images and/or detect one or more objects in the one or more images, wherein the plurality of neural networks are configured to operate at different image resolutions (103),
   wherein a higher zoom factor corresponds to selecting a neural network configured to operate at a lower image resolution, and a lower zoom factor corresponds to selecting a neural network configured to operate at a higher image resolution;
down-scaling the one or more images to the image resolution required by the selected neural network (104);
applying the selected neural network to segment the down-scaled one or more images and/or detect the one or more objects in the down-scaled one or more images (105).

In the context of the present method, "obtaining a zoom factor" refers to the process of determining the current zoom level applied by a camera when it captures the one or more images. The zoom factor is a quantitative measure that represents the degree of magnification or reduction in the field of view achieved by adjusting the camera's zoom settings. This zoom factor can be expressed in conventionally used terms, such as 1X, 2X, or 5X, indicating the relative level of zoom applied, but other measures may be used.

The zoom factor may be obtained in several ways depending on the type of zoom implemented by the camera. For a camera with optical zoom, the zoom factor can be directly read from the camera's hardware settings, where it is typically linked to the physical position of the lens elements. Modern PTZ (pan-tilt-zoom) cameras, for example, often have internal sensors that provide feedback on the current zoom position of the lens, allowing the system to retrieve an accurate zoom factor value at any given time.

Based on the zoom factor, one neural network is selected from a plurality of neural networks. The plurality of neural networks are configured to operate at different image resolutions, wherein a higher zoom factor corresponds to selecting a neural network configured to operate at a lower image resolution, and a lower zoom factor corresponds to selecting a neural network configured to operate at a higher image resolution.

The method may further comprise the step of down-scaling the one or more images to the image resolution required by the selected neural network. This step may refer to adjusting the resolution of the captured image to match the input requirements of the chosen neural network. Each neural network in the system is configured to operate at a particular image resolution, so the input image may need to be resized to align with this resolution before processing.

Down-scaling is the process of reducing the number of pixels in an image, which decreases its resolution. This may be achieved by applying an image resampling technique, such as bilinear interpolation or bicubic interpolation, to reduce the image dimensions while preserving as much detail as possible within the new, smaller resolution. For instance, if a high-resolution image is captured at 1080p but the selected neural network is configured to operate at 720p, the image would be down-scaled from 1080p to 720p.

The selected neural network may then be used to segment the one or more images and/or detect the one or more objects in the down-scaled one or more images.

In one embodiment of the present disclosure, the neural network is dynamically reselected from the plurality of neural networks when the zoom factor changes. This feature enables the system to adapt in real-time to adjustments in the camera's zoom level. By dynamically re-selecting the neural network based on the updated zoom factor, the system can always operate with the neural network model best suited to the current zoom setting. This dynamic selection may be particularly useful in applications with PTZ cameras, where the zoom level may fluctuate frequently to track subjects or capture specific areas of interest.

The re-selection process may be implemented through a control algorithm that continuously monitors the zoom factor and triggers the selection of an appropriate neural network from memory whenever a change in zoom factor is detected. The system may store multiple neural networks in memory, each operating at a different image resolution. When the zoom level changes, the control algorithm may select a neural network that is suitable to use for the new zoom level. This means that the neural network may be selected to ensure that an object of interest can be reliably detected. Neural networks typically output a confidence score or probability for each detected object, indicating the likelihood that the object has been correctly identified. These probabilities can be used to determine the limits for selecting a neural network for each new zoom level.

In one embodiment of the present disclosure, the method comprises the step of re-selecting a neural network configured to operate at a lower image resolution when the zoom factor goes above a predefined upper zoom factor threshold.

The use of an upper zoom factor threshold may reduce the processing load and reduce the time that is needed to perform the segmentation and/or object detection. The saving may, as a starting point, be used such that these tasks can be done continuously in substantially real-time. Another option is to spend the saved processing time on including more features. For example, when the camera zooms in a more detailed analysis of the objects may be relevant, such as a pose estimation or a detection of attributes worn by object (such as a hat or an item carried by the object). A combination of these two options is also possible. The method can utilize the architecture of a typical detection model, which often comprises a backbone and one or more head modules. The backbone can be used to extract fundamental features from an image. The head modules can then use input from the backbone to perform specific tasks. Each head may be specialized for a particular analysis task. In real-time scenarios where some additional processing time is available for each frame, the system can thus incorporate additional head modules to expand the range of tasks. For example, beyond the standard detection tasks, additional heads could be used for, for example, identifying sub-objects, analyzing object behavior (e.g., detecting motion or interactions), or providing richer classification of object attributes. Accordingly, in one embodiment, the computer-implemented method further comprises the step of performing additional analysis based on a detected object in an image and/or detecting further sub-objects associated with the object, wherein the additional analysis and/or sub-object detection is performed if sufficient processing time remains before a subsequent image is obtained, as described below.

In one embodiment of the present disclosure, the method further comprises the step of re-selecting a neural network configured to operate at a higher image resolution when the zoom factor goes below a predefined lower zoom factor threshold. This feature complements the use of the upper threshold by enabling the system to increase resolution when the camera zooms out, covering a broader field of view. The lower zoom factor threshold thus sets a point at which the system determines that the scene's context has widened, necessitating a more detailed view. As the zoom factor drops below this threshold, the system may re-select a neural network configured to operate at a higher image resolution.

In certain implementations, the lower zoom threshold can be configured to align with the specific operational needs of the camera environment. For instance, in a traffic monitoring application, the lower threshold might be set to activate when the camera zooms out enough to cover an entire intersection, ensuring that distant vehicles and pedestrians are detected with sufficient detail.

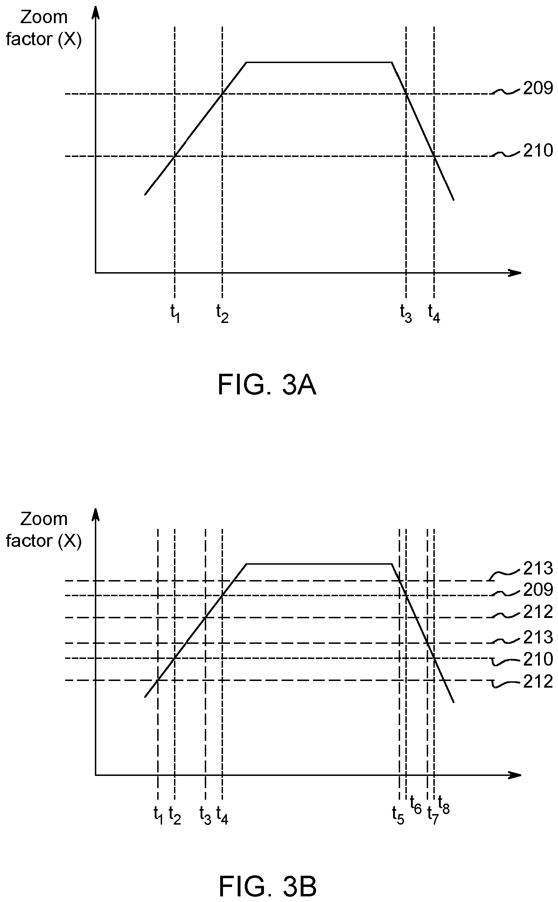

Fig. 3A shows an example of dynamic re-selection of a neural network as the zoom factor changes. In this example the variation of a zoom factor over time is shown. The zoom factor is initially low. In this mode a neural network configured to operate at a high image resolution, i.e. a relatively large and slow neural network, may be used. At t₁, the zoom factor goes above a first zoom factor threshold 210. Accordingly, the method changes to a neural network configured to operate at a lower image resolution, in this case it can be a medium neural network. At t₂, the zoom factor goes above a second zoom factor threshold 209. Accordingly, the method changes to a neural network configured to operate at an even lower image resolution, in this case it can be a relatively small and fast neural network. It shall be noted that the terms small, medium and large are relative terms. The actual sizes of the neural networks depend on the circumstances. At t₃, the zoom factor goes below the second zoom factor threshold 209. Accordingly, the method changes to the medium neural network. At t₄, the zoom factor goes below the first zoom factor threshold 209. Accordingly, the method changes to the large neural network.

The method may comprise the step of loading at least two neural networks, or at least three neural networks, of the plurality of neural networks into a memory, preferably a cache memory, and dynamically re-selecting between the at least two neural networks in the memory when the zoom factor changes. This feature enables the system to store multiple neural networks in accessible memory, reducing the time required for switching between models as the zoom factor adjusts. By preloading two or more networks, the system avoids delays associated with loading models from slower storage devices, such as a hard disk or external storage. Cache memory is particularly beneficial in this implementation, as it allows rapid access to neural networks, supporting real-time adjustments essential in applications that require continuous zooming and quick response times.

The selection between preloaded neural networks can be managed by a control algorithm that monitors the zoom factor and dynamically switches to the appropriate network stored in memory. For instance, the system may preload a high-resolution network optimized for wide views and a low-resolution network suited for close-ups. As the zoom factor changes, the control algorithm may instantly re-select the relevant neural network from memory, enabling seamless transitions without processing delays.

Loading multiple networks into memory also offers flexibility in optimizing for various zoom ranges, as additional networks can be preloaded if the hardware resources allow. For example, in systems with more advanced memory capabilities, three or more networks, each covering a distinct resolution range, can be preloaded. This configuration allows for a finer granularity in network selection as the zoom factor changes, further optimizing detection and segmentation performance.

Moreover, the presently disclosed method may comprise the step of preloading the neural network configured to operate at the lower image resolution when the zoom factor increases above a predefined upper loading threshold, which is lower than the predefined upper zoom factor threshold. This feature allows the system to anticipate the need for a lower-resolution network as the zoom factor approaches a higher level, preloading it in advance to ensure a smooth transition. By setting a predefined upper loading threshold that is lower than the zoom factor threshold for actual network re-selection, the system can prepare in advance without triggering a network switch prematurely.

Fig. 3B shows an example of dynamic re-selection of a neural network as the zoom factor changes, wherein a neural network is preloaded when the zoom factor approaches the corresponding zoom factor threshold. The selection of neural network is the same as in fig. 3A. In addition to the selection of neural networks, the figure shows how the neural networks can be preloaded into the memory at the right moment. The zoom factor is initially low. When the zoom factor increases and, at t₁, goes above a first loading threshold 212, the medium neural network is preloaded. At t₂, the method changes to the medium neural network. When the zoom factor further increases and, at t₃, goes above another first loading threshold 212, the small neural network is preloaded. At t₄, the method changes to the small neural network. In the same way a neural network can be preloaded when the zoom factor decreases. When the zoom factor decreases and, at t₅, goes below a second loading threshold 213, the medium neural network is preloaded. At t₆, the method changes to the medium neural network. When the zoom factor decreases and, at t₇, goes below another second loading threshold 213, the large neural network is preloaded. At t₈, the method changes to the large neural network.

The upper loading threshold may be configured based on application-specific requirements, allowing for a buffer that gives the system time to load the appropriate neural network before it is needed. For example, if the upper zoom factor threshold for switching to a lower-resolution network is set at 15X, the upper loading threshold might be set at 13X. As the zoom factor rises past 13X, the system preloads the lower-resolution network in cache memory, preparing for the transition. There may be different loading thresholds for different zoom factor thresholds.

Similarly, the presently disclosed method may comprise the step of preloading the neural network configured to operate at a higher image resolution when the zoom factor decreases below a predefined lower loading threshold, which is higher than the predefined lower zoom factor threshold. This feature enables the system to prepare for a wider field of view by preloading a higher-resolution network before it is actually required. The lower loading threshold, set above the actual lower zoom factor threshold, acts as an anticipatory trigger, allowing the system to load the high-resolution network into memory in advance. This preloading mechanism ensures that the higher-resolution network is available immediately once the zoom factor decreases to the point where more detail is necessary.

The lower loading threshold can be configured to provide an appropriate buffer that accommodates varying zoom-out speeds and usage scenarios. For example, if the lower zoom factor threshold for switching to a higher-resolution network is set at 5X, the lower loading threshold might be set at 6X. As the zoom factor drops below 6X, the system preloads the high-resolution network in cache memory, ensuring that it is ready for use once the zoom factor decreases to 5X or below. There may be different loading thresholds for different zoom factor thresholds.

In one embodiment of the present disclosure, the step of selecting one neural network from the plurality of neural networks is performed based on a table that associates each neural network with a predefined range of zoom factors for the camera. Preferably, the table comprises associations between each neural network and its corresponding zoom factor range, enabling straightforward and efficient selection based on the current zoom factor. By referencing this table, the system can quickly identify which network to activate as the zoom factor changes, optimizing detection accuracy and computational efficiency. The table-based approach allows for predefined configurations that can be tailored to different operational requirements. Using a table to manage neural network selection also facilitates easy modifications and updates. The table can be adjusted based on empirical data, evolving application needs, or changes in the environment, allowing the system to recalibrate its network associations as necessary. For example, the table could be reconfigured to adapt to new zoom factor ranges as hardware capabilities or application requirements change, without needing to alter the underlying system architecture.

According to a specific and non-limiting example, a table can include three different neural networks: one large (L) neural network, one medium (M) neural network and one small (S) neural network. The neural networks may be associated and used with the following non-limiting range of zoom factors. Table 1 shows an example of a possible configuration.

**Table 1**

| **Zoom factor** | **Neural network** |
|---|---|
| 0-7x | L |
| 7-15x | M |
| 15x + | S |

In one embodiment of the present disclosure, the predefined range of zoom factors in the table is selected such that at least a minimum predefined pixel density for an object of a given physical size located at a maximum distance from the camera in the scene is always provided to the selected neural network. This feature ensures that the system can maintain an acceptable level of image detail for accurate detection and segmentation of objects even at maximum distances. The predefined pixel density ensures that the selected neural network provides sufficient resolution to accurately recognize and classify objects within the field of view. In a practical example, "a minimum predefined pixel density for an object of a given physical size" may be construed such that a given object (e.g. a car or a person), which has a certain size in a captured image when located at a distance from the camera, is depicted with at least a minimum number of pixels in the down-scaled image. **In** other words, the range of zoom factors and associations with neural networks can be made to take such considerations into account, thereby ensuring that objects of interest are correctly detected with the combinations of zoom factors and neural networks. In one embodiment of the presently disclosed method, the neural network is selected such that an object of given physical size located at a maximum distance from the camera in the scene is depicted by at least a predefined minimum number of pixels in the down-scaled image.

The term 'object detection' shall be construed broadly. The term itself may broadly be seen as determining whether or not an object of a certain category is present in a view, but can also be understood to comprise more specific detection, such as recognition of a specific individual.

The term 'pixel density' refers to the concentration of pixels used to represent an object in an image in relation to the physical size of the object in the real world. It essentially describes the resolution at which the physical object is depicted in the image. For example, if an object that is 2 metres in one direction in real-world dimensions is represented by 200 pixels in the direction, the pixel density is 100 pixels per meter. As a person skilled in the art would understand, the pixel density can also be expressed in two dimensions, i.e. pixels per area unit in the real world.

It is known that different detection and recognition tasks require different minimum pixel densities. As an example, recognizing a face may require 125 pixels/meter. Other factors, such as light direction, optics quality may affect the requirements.

The concept of setting up a table can be explained by means of an example. For each image obtained by a camera at a specific zoom factor, it is possible to compute a requested neural network width and requested neural network height. The neural network width and neural network height refer to dimensions of the images that are inputs to the neural network. These parameters can be calculated as: *requested network width = network_width_at_min_zoom* / *(zoom_factor * constant)* and *requested network height = network_height_at_min_zoom* / *(zoom_factor * constant).* When these have been calculated, the available neural networks may be assessed. One that is closest to the calculated requested network width and height can be selected. The constants may thus be selected such that objects in the image in the selected resolution are depicted with at least a minimum desired pixel density. The minimum desired pixel density may correspond to the minimum number of pixels that is required to recognize the object. For example, if an object of interest needs to be represented by at least 50 pixels for accurate detection, the table is configured to assign zoom ranges to each network such that object will be detected if it is at a maximum distance from the camera in the current view.

In one embodiment of the present disclosure, the plurality of neural networks comprises at least three neural networks. By including at least three neural networks, the system achieves finer control over image processing at different zoom levels, ensuring that the selected neural network aligns closely with the camera's current field of view and required level of detail. Each of these three neural networks may be configured for a distinct resolution range. For example, the first network might be configured to operate at a high resolution, and is chosen when the camera is zoomed out to cover a large field of view. The second network could operate at a medium resolution, optimized for mid-range zoom levels, balancing detail and efficiency as the camera zooms closer to specific areas. The third network may be configured for low resolution, suitable for close-up views at high zoom factors, where the field of view is narrower, and less image detail is needed. The presently disclosed method and system are not limited to two or three neural networks. There may be even more neural networks in some embodiments.

In one embodiment of the present disclosure, the computer-implemented method comprises the step of obtaining and/or extracting a maximum depth of a view of one of the images, and selecting the neural network such that an object of a given physical size located within the maximum depth is depicted with at least a predefined pixel density required by the neural network. "A predefined pixel density required by the neural network" may refer to selecting the neural network such that a given object (e.g. a car or a person), which has a certain size in the captured image when located at a distance from the camera, is depicted with at least a minimum number of pixels in the down-scaled image that is used by the neural network, such that the neural network can perform the task with a certain probability of succeeding. The task may be, for example, segmentation or detection of an object of a certain class. This feature enables the system to utilize knowledge of the maximum depth in the scene to optimize the neural network selection. When a maximum depth is identified - such as when the camera view includes a building or other background structure - the system can be configured to evaluate that objects of interest, such as people or vehicles, cannot be positioned beyond this maximum depth. This information allows the system to make informed adjustments to the resolution requirements of the selected neural network for a given task, as it can limit its focus to the range within which objects can realistically appear.

For example, if the camera is facing a building that is 30 meters away, the building serves as a maximum depth background for that particular view. Knowing this maximum depth, the system can ensure that objects in front of the building, such as pedestrians or vehicles, are depicted with a pixel density sufficient for accurate detection and classification. Since any object detected in front of the building must be within this 30-meter range, the system can select a neural network that is optimized for this specific depth, rather than one suited for longer ranges, and down-scale the image to the suitable neural network.

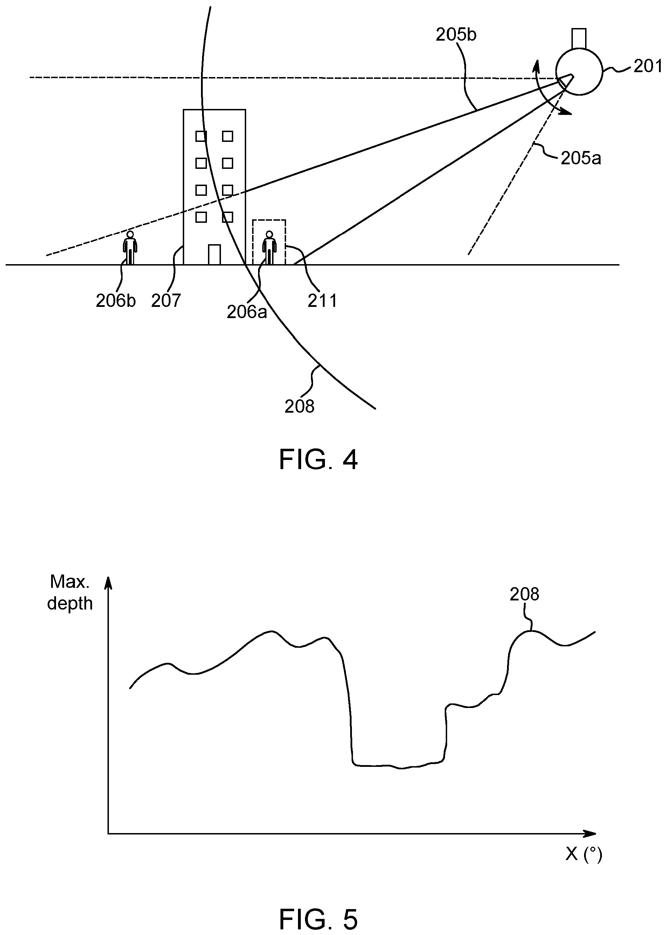

Fig. 4 shows an illustration of a configuration of the presently disclosed camera system for segmentation and/or object detection with a maximum depth 208 for a field of view 205b. In this example the camera 201 has a first field of view 205a. When the camera zooms in to field of view 205b, it identifies the building 207 as a blocking background object and sets a maximum depth 208 for the field of view 205b. In this field of view 205b it is known that an object of a certain type, for example a person 206a will have a certain size and a certain minimum pixel density, since the camera cannot see behind the building. In the example of fig. 4, the camera cannot see object 206b. Since the object 206b cannot be seen by the camera, the method does not have to take into account any parameters related to the detection of the object 206b. In the figure, object 206a has been identified and is surrounded by a boundary box.

The configuration in fig. 4 can be illustrated by means of the following non-limiting example. As a first step the maximum depth of the view, beyond which no objects can be observed, is calculated or extracted. In the example, the building 207 therefore sets the maximum depth 208 for the current field of view 205b. As an example, the maximum depth can be set to 30 meters. In a second step the pixel density at the maximum depth can be calculated for the current zoom factor. As an example, a person being 2 meters tall will be depicted with some number of pixels if the person is 30 meters from the camera and the camera has a given zoom factor. In a third step it is now possible to compare the pixel density with a pixel density that is required by a neural network to perform a certain task, such as detecting an object. If the calculated pixel density at the maximum depth is greater than the required pixel density, it means that the image can be down-scaled while still meeting the pixel density that is required by a neural network to perform the task. Based on this information the method can then select a neural network. For example, the method can select the neural network with the smallest resolution that will be able to perform the task. The example illustrates how the maximum depth can be taken into account to balance processing efficiency while maintaining sufficient accuracy for the task.

The presently disclosed computer-implemented method may further comprise the step of using the camera to scan an environment, such as a 360° view, and process the one or more images to generate a depth map, further comprising taking into account the depth map to set a maximum depth of a view for each image. This feature allows the system to capture a comprehensive representation of the environment by scanning across a wide range, potentially up to a full 360° field of view.

The depth map generated from the scanned images can provide depth information for each area in the environment, allowing the system to establish a maximum depth for each view. The depth map can serve as a reference that enables the system to dynamically adjust its neural network selection based on the maximum depth for each view that is processed.

The scan can, but does not necessarily have to, be a horizontal scan where the camera moves or sweeps across a scene from side to side. If a PTZ camera performs such a scan, it may be referred to as panning or a panorama scan. In this mode, the camera rotates horizontally, sweeping across the scene from side to side to capture a wide field of view.

Fig. 5 shows an example of variation of the maximum depth 208 as the camera scans an environment. The panning in horizontal degrees is shown on the x axis while the maximum depth 208 for horizontal directions is shown on the y axis.

In one embodiment, the computer-implemented method further comprises the step of performing additional analysis based on a detected object in an image and/or detecting further sub-objects associated with the object, wherein the additional analysis and/or sub-object detection is performed if sufficient processing time remains before a subsequent image is obtained. This feature leverages any remaining processing time to perform supplementary task. When the system selects a smaller, less computationally intensive neural network, it can free up processing resources within the frame rate interval, allowing time for further analysis without interrupting the real-time handling of incoming frames.

Typically, the system operates within a predefined frame rate, meaning that each frame needs to be processed within a specific time interval to maintain real-time performance. By selecting a smaller neural network at certain zoom levels or under specific conditions, the system completes the primary object detection and segmentation tasks more quickly, leaving additional processing time available before the next frame must be handled. This extra time can be used to conduct more detailed analyses on the detected objects, such as identifying sub-objects (e.g., attributes like hats, bags, or equipment carried by a person) or performing fine-grained analysis, such as pose estimation or behavioural analysis, to gather more contextual information.

The capability to perform additional analysis based on available processing time provides flexibility and enhances the system's adaptability. For instance, in a security application, after detecting a person, the system may use the extra processing time to perform sub-object detection to identify objects carried by the individual, such as a backpack or an item in their hand. Alternatively, the system could use the extra time to refine the detected object's classification, improving the confidence level of the detection or identifying specific attributes such as clothing color or other distinguishing features. This supplementary information can be valuable for applications that require more detailed object recognition or context-aware analysis.

The disclosure further relates to a computer program having instructions which, when executed by a computing device or computing system, cause the computing device or computing system to carry out the method for segmentation and/or object detection in images captured by a camera having zoom capability according to of the described embodiments. The computer program may be stored on a computer-readable medium, such as a non-volatile memory, an optical disk, or a magnetic disk, or may be transmitted as a data signal via a communications network or other transmission medium. The computer program may be in the form of a standalone application, library, or embedded firmware configured to operate on a range of devices, including but not limited to servers, desktops, mobile devices, and specialized hardware systems such as cameras with built-in processing capabilities.

The disclosure further relates to a camera system comprising a camera for capturing images, the camera having zoom capability; processing circuitry configured to: obtain one or more images from the camera; obtain a zoom factor of the camera, wherein the zoom factor represents a measure of a current zoom level applied by the camera when capturing the one or more images; select, based on the zoom factor, one neural network from a plurality of neural networks configured to segment the one or more images and/or detect one or more objects in the one or more images, wherein the plurality of neural networks are configured to operate at different image resolutions, wherein a higher zoom factor corresponds to selecting a neural network configured to operate at a lower image resolution, and a lower zoom factor corresponds to selecting a neural network configured to operate at a higher image resolution; down-scale the one or more images to the image resolution required by the selected neural network; and apply the selected neural network to segment the down-scaled one or more images and/or detect the one or more objects in the down-scaled one or more images.

As would be understood by a person skilled in the art, the camera system may be configured to carry out the presently disclosed computer-implemented method for segmentation and/or object detection in images according to any embodiment, and vice versa.

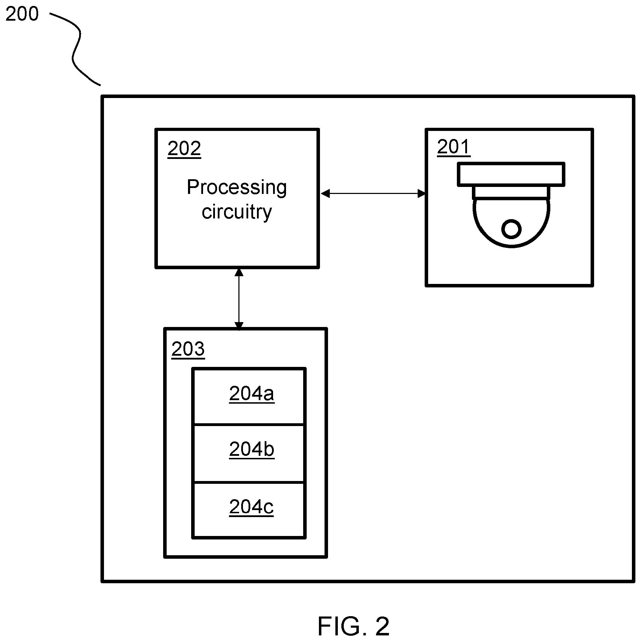

Fig. 2 shows an embodiment of camera system 200 for segmentation and/or object detection. The camera system 200 comprises a camera 201 and processing circuitry 202 configured to perform the steps of the presently disclosed computer-implemented method for segmentation and/or object detection in images captured by the camera 201. The camera system 200 further comprises a memory 203. In the example, the memory 203 has loaded three different neural networks 204a, 204b and 204c.

The processing circuitry may include one or more processors, such as general-purpose processors, central processing units (CPUs), graphics processing units (GPUs), digital signal processors (DSPs), application-specific integrated circuits (ASICs), field-programmable gate arrays (FPGAs), or other specialized hardware components designed to support image processing, neural network inference, and real-time data handling. The processing circuitry may be integrated directly within the camera system.

The processing circuitry may be designed to support parallel processing, hardware acceleration, and optimized data handling techniques. For example, the circuitry may leverage GPUs or dedicated neural processing units (NPUs) to accelerate neural network computations and enable real-time segmentation and object detection even in high-resolution imaging contexts. The circuitry may further support instruction pipelines, vector processing, and data caching to improve efficiency and processing speed. Additionally, the processing circuitry may include components for dynamically allocating processing resources based on the zoom level and associated neural network requirements.

The processing circuitry may be configured to access and execute instructions from non-transitory memory.

### List of elements in figures

100 - computer-implemented method for segmentation and/or object detection
101 - obtaining one or more images from the camera
102 - obtaining a zoom factor of the camera
103 - selecting, based on the zoom factor, one neural network from a plurality of neural networks configured to segment the one or more images and/or detect one or more objects in the one or more images
104 - down-scaling the one or more images to the image resolution required by the selected neural network
105 - applying the selected neural network to segment the down-scaled one or more images and/or detect the one or more objects in the down-scaled one or more images
200 - camera system
201 - camera
202 - processing circuitry
203 - memory
204 - neural network
205 - field of view
206 - object
207 - background object
208 - maximum depth
209 - second/upper zoom factor threshold
210 - first/lower zoom factor threshold
211 - boundary box
212 - first loading threshold
213 - second loading threshold

## Claims

1. A computer-implemented method (100) for segmentation and/or object detection in images captured by a camera (201) having zoom capability, the method comprising:
obtaining one or more images from the camera (201) (101);
obtaining a zoom factor of the camera (201), wherein the zoom factor represents a measure of a current zoom level applied by the camera (201) when capturing the one or more images (102);
selecting, based on the zoom factor, one neural network (204) from a plurality of neural networks (204) configured to segment the one or more images and/or detect one or more objects (206) in the one or more images, wherein the plurality of neural networks (204) are configured to operate at different image resolutions (103),
wherein a higher zoom factor corresponds to selecting a neural network (204) configured to operate at a lower image resolution, and a lower zoom factor corresponds to selecting a neural network (204) configured to operate at a higher image resolution;
down-scaling the one or more images to the image resolution required by the selected neural network (204) (104);
applying the selected neural network (204) to segment the down-scaled one or more images and/or detect the one or more objects (206) in the down-scaled one or more images (105).

2. The computer-implemented method (100) for segmentation and/or object detection in images captured by a camera (201) having zoom capability according to claim 1, wherein the neural network (204) is dynamically reselected from the plurality of neural networks (204) when the zoom factor changes.

3. The computer-implemented method (100) for segmentation and/or object detection in images captured by a camera (201) having zoom capability according to claim 2, comprising the step of re-selecting a neural network (204) configured to operate at a lower image resolution when the zoom factor goes above a predefined upper zoom factor threshold (209).

4. The computer-implemented method (100) for segmentation and/or object detection in images captured by a camera (201) having zoom capability according to any one of claims 2-3, comprising the step of re-selecting a neural network (204) configured to operate at a higher image resolution when the zoom factor goes below a predefined lower zoom factor threshold (210).

5. The computer-implemented method (100) for segmentation and/or object detection in images captured by a camera (201) having zoom capability according to any one of the preceding claims, comprising the step of loading at least two neural networks (204), or at least three neural networks (204), of the plurality of neural networks (204) into a memory (203), preferably a cache memory, and dynamically re-selecting between the at least two neural networks (204) in the memory (203) when the zoom factor changes.

6. The computer-implemented method (100) for segmentation and/or object detection in images captured by a camera (201) having zoom capability according to claims 3-5, comprising the step of preloading the neural network (204) configured to operate at the lower image resolution when the zoom factor increases above a predefined upper loading threshold, which is lower than the predefined upper zoom factor threshold (209), and/or preloading the neural network configured to operate at a higher image resolution when the zoom factor decreases below a predefined lower loading threshold, which is higher than the predefined lower zoom factor threshold (210).

7. The computer-implemented method (100) for segmentation and/or object detection in images captured by a camera (201) having zoom capability according to any one of the preceding claims, wherein the step of selecting one neural network (204) from the plurality of neural networks is performed based on a table that associates each neural network (204) with a predefined range of zoom factors for the camera (201).

8. The computer-implemented method (100) for segmentation and/or object detection in images captured by a camera (201) having zoom capability according to claim 7, wherein the predefined range of zoom factors of the table are selected such that a minimum predefined pixel density for an object (206) of a given physical size located at a maximum distance from the camera (201) is always provided to the selected neural network (204).

9. The computer-implemented method (100) for segmentation and/or object detection in images captured by a camera (201) having zoom capability according to any one of the preceding claims, wherein the neural network (204) is selected such that an object (206) of a given physical size located at a maximum distance from the camera is depicted with at least a predefined pixel density required by the neural network (204), after down-scaling.

10. The computer-implemented method (100) for segmentation and/or object detection in images captured by a camera (201) having zoom capability according to any one of the preceding claims, wherein the plurality of neural networks (204) comprises at least three neural networks (204).

11. The computer-implemented method (100) for segmentation and/or object detection in images captured by a camera (201) having zoom capability according to any one of the preceding claims, comprising the step of obtaining and/or extracting a maximum depth (208) of a view of one of the images, and selecting the neural network (204) such that an object (206) of a given physical size located within the maximum depth (208) is depicted with at least a predefined pixel density required by the neural network (204), after down-scaling.

12. The computer-implemented method (100) for segmentation and/or object detection in images captured by a camera (201) having zoom capability according to any one of the preceding claims, comprising the step of using the camera (201) to scan an environment, such as a 360° view, and process the one or more images to generate a depth map, further comprising taking into account the depth map to set a maximum depth (208) of a view for each image.

13. The computer-implemented method (100) for segmentation and/or object detection in images captured by a camera (201) having zoom capability according to any one of the preceding claims, further comprising the step of performing additional analysis based on a detected object (206) in an image and/or detecting further sub-objects associated with the object (206), wherein the additional analysis and/or sub-object detection is performed if sufficient processing time remains before a subsequent image is obtained.

14. A computer program having instructions which, when executed by a computing device or computing system, cause the computing device or computing system to carry out the method (100) for segmentation and/or object detection in images captured by a camera (201) having zoom capability according to any one of claims 1-13.

15. A camera system (200) comprising:
a camera (201) for capturing images, the camera having zoom capability;
processing circuitry (202) configured to:
obtain one or more images from the camera (201);
obtain a zoom factor of the camera (201), wherein the zoom factor represents a measure of a current zoom level applied by the camera (201) when capturing the one or more images;
select, based on the zoom factor, one neural network (204) from a plurality of neural networks (204) configured to segment the one or more images and/or detect one or more objects (206) in the one or more images, wherein the plurality of neural networks (204) are configured to operate at different image resolutions,
wherein a higher zoom factor corresponds to selecting a neural network (204) configured to operate at a lower image resolution, and a lower zoom factor corresponds to selecting a neural network (204) configured to operate at a higher image resolution;
down-scaling the one or more images to the image resolution required by the selected neural network (204);
apply the selected neural network (204) to segment the down-scaled one or more images and/or detect the one or more objects (206) in the down-scaled one or more images.

## Patentansprüche

1. Computerimplementiertes Verfahren (100) zur Segmentierung und/oder Objektdetektion in Bildern, die durch eine Kamera (201) mit Zoomfähigkeit erfasst werden, wobei das Verfahren umfasst:
Erhalten eines oder mehrerer Bilder von der Kamera (201) (101);
Erhalten eines Zoomfaktors der Kamera (201), wobei der Zoomfaktor ein Maß eines aktuellen Zoomniveaus repräsentiert, das durch die Kamera (201) angewendet wird, wenn das eine oder die mehreren Bilder erfasst werden (102);
Auswählen, basierend auf dem Zoomfaktor, eines neuronalen Netzwerks (204) aus einer Vielzahl von neuronalen Netzwerken (204), die dazu ausgelegt sind, das eine oder die mehreren Bilder zu segmentieren und/oder ein oder mehrere Objekte (206) in dem einen oder den mehreren Bildern zu detektieren, wobei die Vielzahl von neuronalen Netzwerken (204) dazu ausgelegt sind, mit unterschiedlichen Bildauflösungen zu arbeiten (103),
wobei ein höherer Zoomfaktor dem Auswählen eines neuronalen Netzwerks (204) entspricht, das dazu ausgelegt ist, mit einer niedrigeren Bildauflösung zu arbeiten, und ein niedrigerer Zoomfaktor dem Auswählen eines neuronalen Netzwerks (204) entspricht, das dazu ausgelegt ist, mit einer höheren Bildauflösung zu arbeiten;
Herunterskalieren des einen oder der mehreren Bilder auf die Bildauflösung, die durch das ausgewählte neuronale Netzwerk (204) erforderlich ist (104);
Anwenden des ausgewählten neuronalen Netzwerks (204), um das eine oder die mehreren herunterskalierten Bilder zu segmentieren und/oder das eine oder die mehreren Objekte (206) in dem einen oder den mehreren herunterskalierten Bildern zu detektieren (105).

2. Computerimplementiertes Verfahren (100) zur Segmentierung und/oder Objektdetektion in Bildern, die durch eine Kamera (201) mit Zoomfähigkeit erfasst werden, nach Anspruch 1, wobei das neuronale Netzwerk (204) dynamisch aus der Vielzahl von neuronalen Netzwerken (204) neu ausgewählt wird, wenn sich der Zoomfaktor ändert.

3. Computerimplementiertes Verfahren (100) zur Segmentierung und/oder Objektdetektion in Bildern, die durch eine Kamera (201) mit Zoomfähigkeit erfasst werden, nach Anspruch 2, umfassend den Schritt des Neuauswählens eines neuronalen Netzwerks (204), das dazu ausgelegt ist, mit einer niedrigeren Bildauflösung zu arbeiten, wenn der Zoomfaktor über eine vordefinierte obere Zoomfaktorschwelle (209) geht.

4. Computerimplementiertes Verfahren (100) zur Segmentierung und/oder Objektdetektion in Bildern, die durch eine Kamera (201) mit Zoomfähigkeit erfasst werden, nach einem der Ansprüche 2-3, umfassend den Schritt des Neuauswählens eines neuronalen Netzwerks (204), das dazu ausgelegt ist, mit einer höheren Bildauflösung zu arbeiten, wenn der Zoomfaktor unter eine vordefinierte niedrigere Zoomfaktorschwelle (210) geht.

5. Computerimplementiertes Verfahren (100) zur Segmentierung und/oder Objektdetektion in Bildern, die durch eine Kamera (201) mit Zoomfähigkeit erfasst werden, nach einem der vorhergehenden Ansprüche, umfassend den Schritt des Ladens von mindestens zwei neuronalen Netzwerken (204) oder mindestens drei neuronalen Netzwerken (204) der Vielzahl von neuronalen Netzwerken (204) in einen Speicher (203), vorzugsweise einen Cache-Speicher, und des dynamischen Neuauswählens zwischen den mindestens zwei neuronalen Netzwerken (204) im Speicher (203), wenn sich der Zoomfaktor ändert.

6. Computerimplementiertes Verfahren (100) zur Segmentierung und/oder Objektdetektion in Bildern, die durch eine Kamera (201) mit Zoomfähigkeit erfasst werden, nach den Ansprüchen 3-5, umfassend den Schritt des Vorladens des neuronalen Netzwerks (204), das dazu ausgelegt ist, mit der niedrigeren Bildauflösung zu arbeiten, wenn der Zoomfaktor über eine vordefinierte obere Ladeschwelle ansteigt, die niedriger als die vordefinierte obere Zoomfaktorschwelle (209) ist, und/oder Vorladen des neuronalen Netzwerks, das dazu ausgelegt ist, mit einer höheren Bildauflösung zu arbeiten, wenn der Zoomfaktor unter eine vordefinierte untere Ladeschwelle abnimmt, die höher als die vordefinierte untere Zoomfaktorschwelle (210) ist.

7. Computerimplementiertes Verfahren (100) zur Segmentierung und/oder Objektdetektion in Bildern, die durch eine Kamera (201) mit Zoomfähigkeit erfasst werden, nach einem der vorhergehenden Ansprüche, wobei der Schritt des Auswählens eines neuronalen Netzwerks (204) aus der Vielzahl von neuronalen Netzwerken basierend auf einer Tabelle durchgeführt wird, die jedes neuronale Netzwerk (204) mit einem vordefinierten Bereich von Zoomfaktoren für die Kamera (201) assoziiert.

8. Computerimplementiertes Verfahren (100) zur Segmentierung und/oder Objektdetektion in Bildern, die durch eine Kamera (201) mit Zoomfähigkeit erfasst werden, nach Anspruch 7, wobei der vordefinierte Bereich von Zoomfaktoren der Tabelle so ausgewählt wird, dass eine minimale vordefinierte Pixeldichte für ein Objekt (206) einer gegebenen physischen Größe, das sich in einem maximalen Abstand von der Kamera (201) befindet, stets dem ausgewählten neuronalen Netzwerk (204) bereitgestellt wird.

9. Computerimplementiertes Verfahren (100) zur Segmentierung und/oder Objektdetektion in Bildern, die durch eine Kamera (201) mit Zoomfähigkeit erfasst werden, nach einem der vorhergehenden Ansprüche, wobei das neuronale Netzwerk (204) so ausgewählt ist, dass ein Objekt (206) einer gegebenen physischen Größe, das sich in einem maximalen Abstand von der Kamera befindet, nach dem Herunterskalieren mit mindestens einer vordefinierten Pixeldichte dargestellt wird, die durch das neuronale Netzwerk (204) erforderlich ist.

10. Computerimplementiertes Verfahren (100) zur Segmentierung und/oder Objektdetektion in Bildern, die durch eine Kamera (201) mit Zoomfähigkeit erfasst werden, nach einem der vorhergehenden Ansprüche, wobei die Vielzahl von neuronalen Netzwerken (204) mindestens drei neuronale Netzwerke (204) umfassen.

11. Computerimplementiertes Verfahren (100) zur Segmentierung und/oder Objektdetektion in Bildern, die durch eine Kamera (201) mit Zoomfähigkeit erfasst werden, nach einem der vorhergehenden Ansprüche, umfassend den Schritt des Erhaltens und/oder Extrahierens einer maximalen Tiefe (208) einer Ansicht eines der Bilder, und des Auswählens des neuronalen Netzwerks (204), sodass ein Objekt (206) einer gegebenen physischen Größe, das sich innerhalb der maximalen Tiefe (208) befindet, mit mindestens einer vordefinierten Pixeldichte dargestellt wird, die durch das neuronale Netzwerk (204) erforderlich ist, nach dem Herunterskalieren.

12. Computerimplementiertes Verfahren (100) zur Segmentierung und/oder Objektdetektion in Bildern, die durch eine Kamera (201) mit Zoomfähigkeit erfasst werden, nach einem der vorhergehenden Ansprüche, umfassend den Schritt des Verwendens der Kamera (201) zum Scannen einer Umgebung, wie etwa einer 360°-Ansicht, und des Verarbeitens des einen oder der mehreren Bilder, um eine Tiefenkarte zu erzeugen, ferner umfassend das Berücksichtigen der Tiefenkarte, um eine maximale Tiefe (208) einer Ansicht für jedes Bild einzustellen.

13. Computerimplementiertes Verfahren (100) zur Segmentierung und/oder Objektdetektion in Bildern, die durch eine Kamera (201) mit Zoomfähigkeit erfasst werden, nach einem der vorhergehenden Ansprüche, ferner umfassend den Schritt des Durchführens einer zusätzlichen Analyse basierend auf einem detektierten Objekt (206) in einem Bild und/oder des Detektierens weiterer mit dem Objekt (206) assoziierter Unterobjekte, wobei die zusätzliche Analyse und/oder Unterobjektdetektion durchgeführt wird, wenn eine ausreichende Verarbeitungszeit verbleibt, bevor ein nachfolgendes Bild erhalten wird.

14. Computerprogramm mit Anweisungen, die, wenn sie durch eine Rechenvorrichtung oder ein Rechensystem ausgeführt werden, bewirken, dass die Rechenvorrichtung oder das Rechensystem das Verfahren (100) zur Segmentierung und/oder Objektdetektion in Bildern, die durch eine Kamera (201) mit Zoomfähigkeit erfasst werden, nach einem der Ansprüche 1-13 durchführt.

15. Kamerasystem (200), umfassend:
eine Kamera (201) zum Erfassen von Bildern, wobei die Kamera eine Zoomfähigkeit aufweist; eine Verarbeitungsschaltungsanordnung (202), die ausgelegt ist zum:
Erhalten eines oder mehrerer Bilder von der Kamera (201);
Erhalten eines Zoomfaktors der Kamera (201), wobei der Zoomfaktor ein Maß eines aktuellen Zoomniveaus repräsentiert, das durch die Kamera (201) angewendet wird, wenn das eine oder die mehreren Bilder erfasst werden;
Auswählen, basierend auf dem Zoomfaktor, eines neuronalen Netzwerks (204) aus einer Vielzahl von neuronalen Netzwerken (204), die dazu ausgelegt sind, das eine oder die mehreren Bilder zu segmentieren und/oder ein oder mehrere Objekte (206) in dem einen oder den mehreren Bildern zu detektieren, wobei die Vielzahl von neuronalen Netzwerken (204) dazu ausgelegt sind, mit unterschiedlichen Bildauflösungen zu arbeiten,
wobei ein höherer Zoomfaktor dem Auswählen eines neuronalen Netzwerks (204) entspricht, das dazu ausgelegt ist, mit einer niedrigeren Bildauflösung zu arbeiten, und ein niedrigerer Zoomfaktor dem Auswählen eines neuronalen Netzwerks (204) entspricht, das dazu ausgelegt ist, mit einer höheren Bildauflösung zu arbeiten;
Herunterskalieren des einen oder der mehreren Bilder auf die Bildauflösung, die durch das ausgewählte neuronale Netzwerk (204) erforderlich ist;
Anwenden des ausgewählten neuronalen Netzwerks (204), um das eine oder die mehreren herunterskalierten Bilder zu segmentieren und/oder das eine oder die mehreren Objekte (206) in dem einen oder den mehreren herunterskalierten Bildern zu detektieren.

## Revendications

1. Procédé (100), mis en œuvre par ordinateur, de segmentation et/ou de détection d'objets dans des images capturées par une caméra (201) ayant une aptitude au zoom, le procédé comprenant :
l'obtention d'une ou de plusieurs images à partir de la caméra (201) (101) ;
l'obtention d'un facteur de zoom de la caméra (201), le facteur de zoom représentant une mesure d'un niveau de zoom actuel appliqué par la caméra (201) lors de la capture de l'image ou des images (102) ;
la sélection, sur la base du facteur de zoom, d'un réseau neuronal (204) parmi une pluralité de réseaux neuronaux (204) configurés pour segmenter l'image ou les images et/ou détecter un ou plusieurs objets (206) dans l'image ou les images, la pluralité de réseaux neuronaux (204) étant configurée pour fonctionner à des résolutions d'images différentes (103),
dans lequel un facteur de zoom plus élevé correspond à la sélection d'un réseau neuronal (204) configuré pour fonctionner à une résolution d'image plus faible, et un facteur de zoom plus bas correspond à la sélection d'un réseau neuronal (204) configuré pour fonctionner à une résolution d'image plus élevée ;
l'abaissement de l'image ou des images à la résolution d'image requise par le réseau neuronal (204) sélectionné (104) ;
l'application du réseau neuronal (204) sélectionné pour segmenter l'image ou les images abaissées et/ou détecter l'objet ou les objets (206) dans l'image ou les images abaissées (105).

2. Procédé (100), mis en œuvre par ordinateur, de segmentation et/ou de détection d'objets dans des images capturées par une caméra (201) ayant une aptitude au zoom selon la revendication 1, le réseau neuronal (204) étant re-sélectionné dynamiquement parmi la pluralité de réseaux neuronaux (204) lorsque le facteur de zoom change.

3. Procédé (100), mis en œuvre par ordinateur, de segmentation et/ou de détection d'objets dans des images capturées par une caméra (201) ayant une aptitude au zoom selon la revendication 2, comprenant l'étape de resélection d'un réseau neuronal (204) configuré pour fonctionner à une résolution d'image inférieure lorsque le facteur de zoom dépasse un seuil supérieur (209) de facteur de zoom prédéfini.

4. Procédé (100), mis en œuvre par ordinateur, de segmentation et/ou de détection d'objets dans des images capturées par une caméra (201) ayant une aptitude au zoom selon l'une quelconque des revendications 2 à 3, comprenant l'étape de resélection d'un réseau neuronal (204) configuré pour fonctionner à une résolution d'image supérieure lorsque le facteur de zoom passe en dessous d'un seuil inférieur (210) de facteur de zoom prédéfini.

5. Procédé (100), mis en œuvre par ordinateur, de segmentation et/ou de détection d'objets dans des images capturées par une caméra (201) ayant une aptitude au zoom selon l'une quelconque des revendications précédentes, comprenant l'étape consistant à charger au moins deux réseaux neuronaux (204), ou au moins trois réseaux neuronaux (204), de la pluralité de réseaux neuronaux (204) dans une mémoire (203), de préférence une mémoire cache, et à re-sélectionner dynamiquement entre les au moins deux réseaux neuronaux (204) dans la mémoire (203) lorsque le facteur de zoom change.

6. Procédé (100), mis en œuvre par ordinateur, de segmentation et/ou de détection d'objets dans des images capturées par une caméra (201) ayant une aptitude au zoom selon les revendications 3 à 5, comprenant l'étape consistant à pré-charger le réseau neuronal (204) configuré pour fonctionner à la résolution d'image inférieure lorsque le facteur de zoom augmente au-dessus d'un seuil supérieur de chargement prédéfini, qui est inférieur au seuil supérieur (209) de facteur de zoom prédéfini, et/ou à pré-charger le réseau neuronal configuré pour fonctionner à une résolution d'image supérieure lorsque le facteur de zoom diminue en dessous d'un seuil inférieur de chargement prédéfini, qui est supérieur au seuil inférieur (210) de facteur de zoom prédéfini.

7. Procédé (100), mis en œuvre par ordinateur, de segmentation et/ou de détection d'objets dans des images capturées par une caméra (201) ayant une aptitude au zoom selon l'une quelconque des revendications précédentes, l'étape de sélection d'un réseau neuronal (204) parmi la pluralité de réseaux neuronaux étant effectuée sur la base d'une table qui associe chaque réseau neuronal (204) à une plage prédéfinie de facteurs de zoom pour la caméra (201).

8. Procédé (100), mis en œuvre par ordinateur, de segmentation et/ou de détection d'objets dans des images capturées par une caméra (201) ayant une aptitude au zoom selon la revendication 7, la plage prédéfinie de facteurs de zoom de la table étant sélectionnée de telle sorte qu'une densité de pixels minimale prédéfinie pour un objet (206) d'une taille physique donnée situé à une distance maximale de la caméra (201) soit toujours fournie au réseau neuronal (204) sélectionné.

9. Procédé (100), mis en œuvre par ordinateur, de segmentation et/ou de détection d'objets dans des images capturées par une caméra (201) ayant une aptitude au zoom selon l'une quelconque des revendications précédentes, le réseau neuronal (204) étant sélectionné de telle sorte qu'un objet (206) d'une taille physique donnée situé à une distance maximale de la caméra soit représenté avec au moins une densité de pixels prédéfinie requise par le réseau neuronal (204), après l'abaissement.

10. Procédé (100), mis en œuvre par ordinateur, de segmentation et/ou de détection d'objets dans des images capturées par une caméra (201) ayant une aptitude au zoom selon l'une quelconque des revendications précédentes, la pluralité de réseaux neuronaux (204) comprenant au moins trois réseaux neuronaux (204).

11. Procédé (100), mis en œuvre par ordinateur, de segmentation et/ou de détection d'objets dans des images capturées par une caméra (201) ayant une aptitude au zoom selon l'une quelconque des revendications précédentes, comprenant l'étape d'obtention et/ou d'extraction d'une profondeur maximale (208) d'une vue de l'une des images, et la sélection du réseau neuronal (204) de telle sorte qu'un objet (206) d'une taille physique donnée situé en-deçà de la profondeur maximale (208) soit représenté avec au moins une densité de pixels prédéfinie requise par le réseau neuronal (204), après l'abaissement.

12. Procédé (100), mis en œuvre par ordinateur, de segmentation et/ou de détection d'objets dans des images capturées par une caméra (201) ayant une aptitude au zoom selon l'une quelconque des revendications précédentes, comprenant l'étape d'utilisation de la caméra (201) pour balayer un environnement, notamment dans une vue sur 360°, et traiter l'image ou les images pour générer une carte de profondeur, comprenant en outre la prise en compte de la carte de profondeur pour définir une profondeur maximale (208) d'une vue pour chaque image.

13. Procédé (100), mis en œuvre par ordinateur, de segmentation et/ou de détection d'objets dans des images capturées par une caméra (201) ayant une aptitude au zoom selon l'une quelconque des revendications précédentes, comprenant en outre l'étape de réalisation d'une analyse supplémentaire sur la base d'un objet détecté (206) dans une image et/ou la détection d'autres sous-objets associés à l'objet (206), l'analyse supplémentaire et/ou la détection de sous-objets étant effectuées s'il reste un temps de traitement suffisant avant qu'une image suivante soit obtenue.

14. Programme informatique comprenant des instructions qui, lorsqu'elles sont exécutées par un dispositif informatique ou un système informatique, amènent le dispositif informatique ou le système informatique à réaliser le procédé (100) de segmentation et/ou de détection d'objets dans des images capturées par une caméra (201) ayant une aptitude au zoom selon l'une quelconque des revendications 1 à 13.

15. Système (200) de caméra comprenant :
une caméra (201) destinée à capturer des images, la caméra ayant une aptitude au zoom ;
des circuits (202) de traitement configurés pour :
obtenir une ou plusieurs images à partir de la caméra (201) ;
obtenir un facteur de zoom de la caméra (201), le facteur de zoom représentant une mesure d'un niveau de zoom actuel appliqué par la caméra (201) lors de la capture de l'image ou des images ;
sélectionner, sur la base du facteur de zoom, un réseau neuronal (204) parmi une pluralité de réseaux neuronaux (204) configurés pour segmenter l'image ou les images et/ou détecter un ou plusieurs objets (206) dans l'image ou les images, la pluralité de réseaux neuronaux (204) étant configurée pour fonctionner à des résolutions d'images différentes,
dans lequel un facteur de zoom plus élevé correspond à la sélection d'un réseau neuronal (204) configuré pour fonctionner à une résolution d'image plus faible, et un facteur de zoom plus bas correspond à la sélection d'un réseau neuronal (204) configuré pour fonctionner à une résolution d'image plus élevée ;
abaisser l'image ou les images à la résolution d'image requise par le réseau neuronal (204) sélectionné ;
appliquer le réseau neuronal (204) sélectionné pour segmenter l'image ou les images abaissées et/ou détecter l'objet ou les objets (206) dans l'image ou les images abaissées.
